# EUROPÄISCHE PATENTSCHRIFT

(11) **EP 2 296 244 B1**
(45) Veröffentlichungstag und Bekanntmachung des Hinweises auf die Patenterteilung: **18.02.2015**
(21) Anmeldenummer: 09167378.0
(22) Anmeldetag: 06.08.2009
(51) Int. Cl.: H02H 3/16, H02J 3/38

(54) **Verfahren und Schaltungsanordnung zum Verbinden mindestens eines Strings einer Photovoltaikanlage mit einem Wechselrichter**
Method and device for connecting at least one string of a photovoltaic assembly with an inverter
Procédé et dispositif destinés à la connexion d'au moins une chaîne d'installation photovoltaïque et d'un onduleur

(43) Veröffentlichungstag der Anmeldung: 16.03.2011
(73) Patentinhaber: SMA Solar Technology AG, 34266 Niestetal (DE)
(72) Erfinder: Falk, Andreas, 34131 Kassel (DE)
(74) Vertreter: Hüppe, Paul Wilhelm

(56) Entgegenhaltungen:
- WO-A1-2008/108770
- JP-A- 10 285 965
- JP-A- 2002 091 586
- US-A1- 2005 139 259
- US-A1- 2008 123 226
- US-A1- 2009 032 082
- US-A1- 2009 190 275
- CRAMER G ET AL: "STRING-WECHSELRICHTER MACHEN SOLARSTROM BILLIGER", ELEKTRONIK, WEKA FACHZEITSCHRIFTENVERLAG, POING, DE, vol. 45, no. 18, 3 September 1996 (1996-09-03), XP000633225, ISSN: 0013-5658

## Beschreibung

### TECHNISCHES GEBIET DER ERFINDUNG

Die Erfindung bezieht sich auf ein Verfahren zum Verbinden mindestens eines Strings einer Photovoltaikanlage, der mehrere Solarmodule umfasst, mit einem Wechselrichter, der elektrische Leistung von der Photovoltaikanlage in ein Wechselstromnetz einspeist, mit den Merkmalen des Oberbegriffs des unabhängigen Patentanspruchs 1 sowie auf eine entsprechende Schaltungsanordnung mit den Merkmalen des Oberbegriffs des unabhängigen Patentanspruchs 5.

### STAND DER TECHNIK

Eine Photovoltaikanlage größerer Leistung besteht in aller Regel aus mehreren Strings, die jeweils mehrere Solarmodule umfassen. Dabei sind die Solarmodule jedes Strings zumindest in Reihe, häufig aber auch parallel zueinander geschaltet, um einerseits eine gewünschte Ausgangsspannung und andererseits einen gewünschten Ausgangsstrom je String bereitzustellen. Um die mehreren Strings einer solchen Photovoltaikanlage mit einem zentralen Wechselrichter zur Einspeisung von elektrischer Leistung von der Photovoltaikanlage in ein Wechselstromnetz zu verbinden, müssen je nach Fläche der einzelnen Strings und der räumlichen Anordnung der Strings oft längere Leistungsstromleitungen verlegt werden. Diese Leistungsstromleitungen bedeuten aufgrund ihrer notwendigen großen Leitungsquerschnitte zum einen erhebliche Kosten und zusätzlich laufende Leitungsverluste Infolge ihres elektrischen Widerstands. Grundsätzlich wäre es zwar möglich, die notwendigen Leitungsquerschnitte der Leistungsstromleitungen bzw. die Leitungsverluste zu reduzieren, wenn die Ausgangsspannung jedes Strings durch die Reihenschaltung einer größeren Anzahl von Solarmodulen erhöht würde, wobei bei gleicher Anzahl der Solarmodule deren Parallelschaltung abgebaut und entsprechend der Strom reduziert würde. Dieses Konzept ist aber nicht beliebig umsetzbar, weil hierdurch die Ausgangsspannungen der Strings schnell auf ein als gefährlich angesehenes Niveau ansteigen. So sind z. B. Spannungen von mehr als 600 V gegenüber Erde bei normalen elektrischen Anlagen in den USA grundsätzlich unzulässig. Hierdurch werden in der Praxis die möglichen Ausgangsspannungen der Strings einer Photovoltalkanlage beschränkt und die Möglichkelten, kleinere Ströme bei höheren Spannungen zu leiten, um Leitungsquerschnitte der Leistungsstromieltung einzusparen, eingeschränkt.

Bei dem Produkt "Solaron Remote PV Tie (RPT)" der Firma Advanced Energy Industries, Inc., Fort Collins, Colorado, USA (siehe www.advanced-enery.com) ist ein String einer Photovoltaikanlage mit mehreren in Reihe und parallel geschalteten Solarmodulen in zwei in Reihe geschaltete Teilstrings aufgeteilt, zwischen denen ein Sicherheitsschalter vorgesehen ist. Ausgangsseitig ist der String über zwei Leistungsstromleitungen, in denen jeweils ein Leistungsschalter vorgesehen ist, mit einem Wechselrichter verbunden, der elektrische Leistung von der Photovoltaikanlage in ein dreiphasiges 480 V-Wechselstromnetz einspeist. Dabei stellt dieses Wechselstromnetz im Betrieb der Photovoltaikanlage auch für die Photovoltaikanlage einen Erdbezug bereit. Wenn die Photovoltaikanlage durch geöffnete Leistungsschalter in den Leistungsstromleitungen von dem Wechselrichter und damit auch von dem Wechselstromnetz getrennt ist, wird der Sicherheitsschalter zwischen den beiden Teilstrings geöffnet und zugleich werden Schalter in Potentialleitungen geschlossen, die die beiden Teilstrings auf den beiden Seiten des Sicherheitsschalters mit dem Wechselrichter verbinden. Durch die Trennung der beiden Tellatrings wird die an jedem Punkt der Photovoltaikanlage maximal erzeugte Spannung und damit auch die maximale Spannung gegenüber Erde auf 600 V begrenzt. Über die Potentialleitung zu den beiden Teilstrings können diese zudem auf das Vorliegen von Erdschlussfehlern überprüft werden; dies natürlich nur, solange die Photovoltaikanlage außer Betrieb ist. Wenn die Photovoltaikanlage wieder in Betrieb gesetzt wird, werden die Schalter in den Potentialleitungen zu den Teilstrings erneut zu demselben Zeitpunkt geöffnet, zu dem der Sicherheltsschalter zwischen den Teilstrings geschlossen wird, um den Kontakt der Teilstrings über die Potentialleltungen mit Erde angesichts des Potentialbezugs der Photovoltaikanlage über das 480 V-Wechselstromnetz wieder zu unterbrechen. Ein während des Betriebs der Photovoltaikanlage auftretender Erdschluss führt bei dieser bekannten Schaltungsanordnung zu erheblichen Kurzschlussatrömen, welche durch das Öffnen üblicher Leitungs- oder Fehlerstromschutzschalter zu unterbrechen sind. Zudem kann Im Betrieb der Photovoltaikanlage in der bekannten Schaltungsanordnung das Anfallen größerer Spannungen als 600 V gegenüber Erde nicht grundsätzlich verhindert werden. Erreicht wird jedoch, dass der eine Ausgangsspannung von 1200 V liefernde String nur über zwei Leistungsstromleitungen mit dem Wechselrichter verbunden werden muss. Alle weiteren Leitungen zwischen dem Wechselrichter und dem String führen keinen Leistungsstrom und sind daher nur von vergleichsweise geringem Querschnitt.

In der US 2009/0032082 A1, die offensichtlich die durch das Produkt "Solaron Remote PV Tie (RPT)" verwirklichte Lehre betrifft, ist ausgeführt, dass durch Verbinden der Neutralleiter der Teilstrings und durch das Halten dieser Neutralleiter im Bereich einer virtuellen Erde die Notwendigkeit, teure Neutralleitungen mit großen Querschnitten von den Strings zu dem Wechselrichter zu verlegen, vermieden wird.

Aus der US 2009/0190275 A1, die zur Patentfamilie der US 2009/0032082 A1 gehört, werden weitere Aspekte des Produkts "Solaron Remote PV Tie (RPT)" näher beschrieben. Dabei wird ebenfalls betont, dass Photovoltaiksysteme gemeinhin einen Isolationstransformator In dem Wechselrichter verwendet haben, um die Erdung sowohl der Photovoltaikanlage als auch des Netzes zu ermöglichen, damit den gesetzlichen Anforderungen Genüge getan werden kann. Stattdessen wird gemäß der US 2009/0190275 A1 durch den laufenden Wechselrichter und dessen Verbindung mit dem Netz eine virtuelle Erdung der Verbindung der beiden Teilstrings bewirkt. Solange diese virtuelle Erdung anhält, unterbleibt die unmittelbare Erdung der Verbindung der beiden Teilstrings.

Bei einer aus der JP 10285965A bekannten Photovoltaikanlage sind die Merkmale des Oberbegriffs der unabhängigen Patentansprüche 1 und 6 verwirklicht. Dort ist ein String der Photovoltaikanlage in der Mitte mit einem Nullleiter und an seinen Enden mit je einer Leistungsstromleitung verbunden, die sämtlich zu einem Wechselrichter zur Einspeisung elektrischer Leistung von der Photovoltaikanlage in ein Wechselstromnetz führen. In dem Nullleiter und den Leistungsstromleitungen sind Sicherheitsschalter geschaltet, die geöffnet werden, wenn an dem Nullleiter ein Erdschlussfehler registriert wird. Der Wechselrichter ist von dem Wechselstromnetz über einen Transformator galvanisch entkoppelt.

Aus der JP 2002 091586 A ist es bekannt, einen String einer Photovoltaikanlage beim Auftreten eines Erdschluslfehlers durch Öffnen von zwischengeschalteten Schaltern in Teilstrings zu unterteilen, um die an dem String gegenüber Erde auftretenden Spannungen zu begrenzen.

Aus der WO 2008/108770 A1 ist eine der US-amerikanischen Norm NEC entsprechende Photovoltaikanlage mit einem zwei Teilstrings aufweisenden String und einem gewollt transformatorlosen Wechselrichter bekannt. Der String ist über zwei Leistungsstromleitungen mit dem Wechselrichter verbunden, wobei in jeder der Leistungsstromleitungen ein Sicherheitsschalter vorgesehen ist. Ein weiterer Sicherheitsschalter ist zwischen den beiden Teillstrings vorgesehen. Dem weiteren Sicharheitsschalter ist eine Reihenschaltung von zwei Sicherungen parallel geschaltet, deren Mittelpunkt geerdet ist. Wenn eine der Sicherungen ausgelöst wird, werden alle Sicherheitsschalter geoffnet. In einer alternativen Ausführungsform der bekannten Photovoltaikanlage sind zwischen den beiden Teilstrings zwei Sicherheitsschalter vorgesehen, deren Mittelpunkt über eine Sicherung und einen Stromsensor mit Erde verbunden ist, um einen Erdstromfehler zu erkennen, in dessen Folge alle Sicherheitsschalter geöffnet werden. Hier sind den beiden Sicherheitsschaltern zwei Widerstände in Reihe geschaltet, deren Mittelpunkt geerdet ist, um die beiden Teilstrings bei geöffneten Sicherheitsschaltern weich zu erden.

Die US 2008/123226 A1 offenbart einen Ground Fault Detector Interruptor (GFDI) zur Verwendung mit einer Gleichspannungsquelle. Der GFDI ist an einen Erdanschluss der Gleichspannungsquelle abzuschließen und weist zwischen diesem und Erde einen Stromdetektor und einen Sicherheitsschalter auf, der geöffnet wird, wenn ein Stromgrenzwert überschritten wird.

Die US 2005/139259 A1 offenbart eine transformatorlose Spannungswendlung in einem Wechseirichter einer Photovoltaikanlage. Dabei ist ein Mittelpunkt zwischen zwei Teilstrings eines Strings der Photovoltaikanlage mit einem geerdeten Mittelpunkt des Wechselrichters verbunden. Die Photovoltaikanlage ist an ein Netz, in das sie einspeist, über einen Transformator angeschlossen.

Cramer G et al: "String-Wechselrichter machen Solarstrom billiger", Elektronik, WEKA Fachzeitschriftenverlag, Poing, DE, Bd. 45, Nr. 18, 3. September 1996 (1996-09-03). XP000633225, ISSN: 0013-5658 offenbaren die Verwendung von Stringwechselrichtern, wobei In einem solchen Stringwechselrichter drei Sicherheitsschalter für einen String vorgesehen sind. Zwei der Sicherheitsschalter sind in Leistungsstromleitungen zwischen dem String und den Eingängen des Wechselrichters vorgesehen. Der dritte Sicherheltsschalter ist zwischen zwei Leistungsstromleitungen vorgesehen, die von miteinander zu verbindenden Enden von zwei Tellstrings des Strings zu dem Stringwechselrichter führen.

### AUFGABE DER ERFINDUNG

Der Erfindung liegt die Aufgabe zugrunde, ein Verfahren und eine Schallungsanordnung zum Verbinden mindestens eines Strings einer Photovoltaikanlage, der mehrere Solarmodule umfasst, mit einem Wechselrichter, der elektrische Leistung von der Photovoltaikanlage in ein Wechselstromnetz einspeist, aufzuzeigen, mit denen ein in einem der Tellstrings auftretender Erdschlussfehler lokalisierbar ist.

### LÖSUNG

Erfindungsgemäß wird diese Aufgabe durch ein Verfahren mit den Merkmalen des unabhängigen Patentanspruchs 1 und eine Schaltungsanordnung mit den Merkmalen des unabhängigen Patentanspruchs 5 gelöst. Bevorzugte Ausführungsformen des neuen Verfahrens und der neuen Schallungsanordnung sind in den abhängigen Patentansprüchen definiert.

### BESCHREIBUNG DER ERFINDUNG

Bei dem neuen Verfahren, bei dem zwischen die beiden Teilstrings mindestens ein Sicherheitsschalter geschaltet wird, bei dem der String über zwei Leistungsstromleitungen mit dem Wechselrichter verbunden wird und bei dem in jeder der Leistungsstromleitungen ein weiterer Sicherheitsschalter vorgesehen wird, wird der in zwei in Reihe geschaltete Teilstrings unterteilte String zunächst von dem Wechselstromnetz galvanisch entkoppelt. Nur dadurch ist es möglich, der Photovoltaikanlage im Betrieb einen fest definierten Erdbezug zu geben. Konkret geschieht dies hier dadurch, dass ein Mittelpunkt des Strings zwischen den beiden Teilstrings im Betrieb der Photovoltalkanlage mit Erde verbunden wird. Auf diese Weise wird im regulären Betrieb der Photovoltaikanlage sichergestellt, dass keine größere Spannung als die halbe Ausgangsspannung des Strings an irgendeinem Punkt der Photovoltaikanlage gegenüber Erde anliegt. Wenn bei einem Erdschlussfehler von dem Mittelpunkt des Strings ein Strom nach Erde fließt, der einen Erdstromgrenzwert überschreitet, so dass die Erdung des Strings an dem Mittelpunkt zwischen seinen Teilstrings zur Unterbrechung dieses Erdstroms beendet werden muss, werden gemäß der vorliegenden Erfindung die Sicherheitsschalter zwischen den Teilstrings und In den Leistungsstromleitungen von dem String zu dem Wechselrichter geöffnet. Auf diese Weiss werden die Teilstrings voneinander und von den Leistungsstromleitungen getrennt, so dass auch ohne Erdung keine größere Spannung als die halbe Ausgangsspannung des Strings an irgendeinem Punkt der Photovoltalkanlage gegenüber Erde anliegt

Die galvanische Entkopplung des Strings von dem Wechselstromnetz erfolgt üblicherweise mittels eines Transformators, über den der Wechselrichter In das Wechselstromnetz einspeist und dessen Wechselrichterseite potentialfrei ist.

Bei der vorliegenden Erfindung können die Mittelpunkte mehrerer Stringe über eine gemeinsame Patentielschiene mit Erde verbunden werden. Dann werden bei einem nach Erde fließenden Strom zunächst alle Strings mittels der Sicherheltsschalter von dem Wechselrichter abgetrennt und In Teilstrings unterteilt. In aller Regel tritt jedoch ein Erdschlussfehler nur bei einem der Strings auf, und mit den anderen Strings der Photovoltaikanlage könnte der Wechselrichter störungsfrei weiter gespeist werden. Um den gestörten String zu ermitteln, kann in jeder Verbindung jedes Strings mit der gemeinsamen Potentialschiene ein Schalter vorgesehen sein, um zunächst alle Strings von der Potentialschiene abzutrennen und dann einzeln wieder zuzuschalten. Beim Zuschalten des Strings mit dem Erdschlussfehler tritt dann der signifikante Strom nach Erde wieder auf.

Damit diese Lokalisierung des Erdschlussfehlers auch bei geöffnetem Sicherheitsschalter zwischen den Teilstrings jedes Strings möglich ist, wird jede Seite des Sicherheitsschalters zwischen den beiden Teilstrings einzeln mit Erde bzw. der gemeinsamen Potentialschiene verbunden und dabei geschaut, ob der Strom nach Erde wieder auftritt.

Nachdem ein Erdschlussfehler lokalisiert wurde, werden nur noch den Erdschlussfehler nicht aufweisende Strings wieder mit dem Wechselrichter verbunden. Mit diesen kann die Einspeisung elektrischer Energie von der Photovoltaikanlage in das Wechselstromnetz ungestört fortgesetzt werden.

Auch die Leistungsstromleitungen von mehreren Strings können zu Leistungsstromschienen zusammengefasst werden. Vorzugsweise wird dabei in jeder der beiden Leistungsstromschienen, an die eine Mehrzahl von Strings angeschlossen ist, ein Leistungsschalter vorgesehen. Dieser Leistungsschalter liegt typischerweise Innerhalb des Gehäuses des Wechselrichters vor, während die In den einzelnen Leistungsstromleitungen vorliegenden Sicherheitsschulter am Ort der Strings vorgesehen sind.

Bei der neuen Schaltungsanordnung kann die Verbindung des Mittelpunkts zwischen den beiden Teilstrings mit Erde im Betrieb der Photovoltaikanlage über einen GFDI-Schutzschalter bereitgestellt werden. Das Auslösen oder Fallen des GFDI-Schutzschalters zeigt an, dass ein unzulässig hoher Erdstrom oberhalb des durch den GFDI-Schutzschalter definierten Erdstromgrenzwerts vorgelegen hat, was auf einen Erdschlussfehler hinweist. Entsprechend sind dann mit dem Fallen des GFDI-Schutzschalters auch die Sicherheitsschalter zu öffnen.

Alternativ kann der Mittelpunkt zwischen den beiden Teilstrings Im Sinne eines sogenannten Softgrounding über einen Widerstand mit Erde verbunden sein, wobei Erdschlusssicherheitseinrichtungen der Schaltungsanordnung eine über dem Widerstand abfallende Spannung erfassen. Wenn diese Spannung auf einen bestimmten Wert ansteigt, zeigt auch dies das Überschreiten eines Erdstromgrenzwerts an. Entsprechend sind die Sicherheitsschalter zu öffnen. Regelmäßig erweist es sich auch als günstig, den Widerstand mit einem zusätzlichen Schutzschalter in Reihe zu schalten, der geöffnet wird, um den unerwünscht hohen Erdstrom zu unterbrechen.

Bei der neuen Schaltungsanordnung ist es bevorzugt, wenn der Mittelpunkt zwischen den beiden Teilstrings in einem Gehäuse des Wechselrichters mit Erde verbunden ist. Die Verbindung mit Erde erfolgt damit in dem zentralen Wechselrichter, so dass ein GFDI-Schutzschalter oder irgendein anderer Schutzschalter der den Erdstrom begrenzt, dort einfach zurückgesetzt werden kann, um den Erdschlussfehler zu lokalisieren bzw. um nach dem Lokalisieren des Erdschlussfehlers die hiervon nicht betroffenen Strings unter Erdung ihrer Mittelpunkte weiter zu betreiben.

Um die Erdung des Mittelpunkts In einem Gehäuse des Wechseirichters zu ermöglichen, muss von diesem Mittelpunkt keine Leistungsstromleitung zu dem Gehäuse geführt werden. Hierfür reicht eine einfache Potentialleitung mit geringem Leitungsquerschnitt von dem String zu dem Gehäuse aus. Vorzugsweise verlaufen neben den beiden Leistungsstromleitungen mehrere derartige einfache Leitungen mit geringem Leitungsquerschnitt von dem String zu dem Gehäuse.

Dabei Ist zwischen Erde und jedem der Teilstrings mindestens ein dem jeweiligen Teilstring zugeordneter Schalter vorgesehen, den die Erdschlusssicherheitseinrichtungen zur Lokalisierung eines Erdschlussfehlers einzeln schließen. Grundsätzlich können diese beiden Schalter je String, mit denen die Lokalisierung des Erdschlussfehlers erfolgt, durch zwei In Reihe geschaltete Sicherheitsschalter zwischen den beiden Tellstrings verwirklicht werden. Auch diese Sicherheitsschalter müssen aber am Ort des Strings llegen, weil sie den Leistungsstrom zwischen den Tellstrings führen, und sie müssen für die Lokalisierung des Erdschlussfehlers einzeln schließbar sein. Bevorzugt ist es jedoch, wenn die den einzelnen Teilstrings zugeordneten Schalter in einem Gehäuse des Wechselrichters angeordnet sind. Um dies zu realisieren, muss je Teilstring eine Potentialleitung zu dem Gehäuse geführt würden, in der dann der Schalter angeordnet wird. Dabei sind die Schalter vorzugsweise zwischen die jeweilige Potentialleitung und eine gemeinsame Potentialschiene geschaltet, über die mehrere Strings gemeinsam mit Erde verbunden sind.

Während des Betriebs der Photovoltaikanlage sind die den einzelnen Teilstrings in dem Gehäuse des Wechselrichters zugeordneten Schalter geschlossen. In Folge des Auftretens eines Stroms von der gemeinsamen Potentialschiene gegen Erde werden sie geöffnet, so dass ein durch den Erdstrom geöffneter Schutzschalter zurückgesetzt werden kann, ohne direkt erneut zu fallen. Wenn dann die Schalter in den einzelnen Potentialleitungen nacheinander geschlossen werden, tritt der Erdstrom nach dem Schließen des Schalters wieder auf, der dem mit dem Erdschlussfehler behafteten Tellstring zugeordnet ist. Der diesen Tellstring umfassende String wird dann zukünftig nicht mehr betrieben, bis der Erdschlussfehler beseitigt ist, d. h. die ihm zugeordneten Sicherheitsschalter und Schalter in den Potentialleitungen bleiben geöffnet.

Bei der neuen Schaltungsanordnung können die Sicherheitsschalter auch zum eigentlichen Zuschalten und Abschalten der gesamten Photovoltaikanlagen zu und von dem Wechselrichter vorgesehen sein. Hierfür können aber auch in üblicher Weise zentrale Leistungsschalter in Leistungsstromschlenen innerhalb des Wechselrichters vorgesehen werden, wobei die Leistungsstromleitungen von mehreren Strings an diese Leistungsstromachienen angeschlossen sind.

Das neue Verfahren und die neue Schaltungsanordnung sind insbesondere zum Anschluss mehrerer Strings über jeweils nur zwei Leistungsstromleitungen an einen remoten, d. h. 10 bis 1000 m von ihnen entfernt liegenden Wechselrichter vorgesehen, wobei sich alle Sicherheitsschalter jedes Strings am Ort dieses Strings befinden. Von dem jeweiligen String führen dann zusätzlich nur solche Leitungen zu dem Wechselrichter, die keinen Leistungsstrom führen und entsprechend einen geringen Leitungsquerschnitt aufweisen können.

### KURZBESCHREIBUNG DER FIGUREN

Die Erfindung wird im Folgenden anhand von Ausführungsbeispielen unter Bezugnahme auf die beigefügten Zeichnungen näher erläutert und beschirieben.
- **Fig. 1**: zeigt den Aufbau eines Strings einer erfindungsagemäßen Schaltungsanordnung.
- **Fig. 2**: zeigt die Verbindung mehrerer Strings gemäß Fig. 1 mit einem Wechselrichter bei einer ersten Ausführungsform der erfindungsgemäßen Schaltungsanordnung.
- **Fig. 3**: zeigt eine zweite erfindungsgemäße Schaltungsanordnung, bei der sowohl der die einzelnen Strings als auch der Wechselrichter gegenüber Fig. 2 variiert sind; und
- **Fig. 4**: zeigt noch eine weitere Ausführungsform der erfindungsgemäßen Schaltungsanordnung.

### FIGURENBESCHREIBUNG

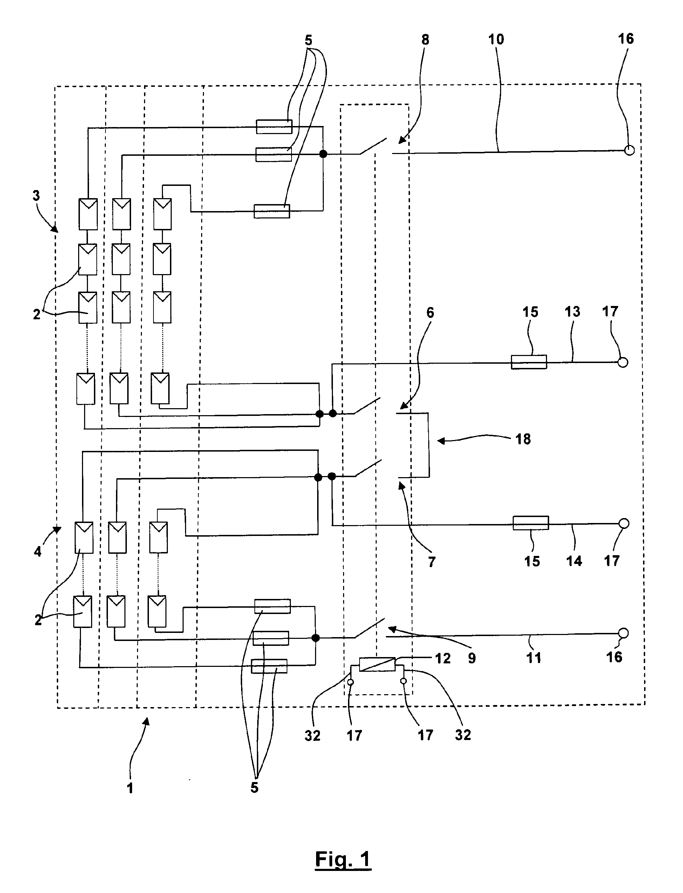

Der in Flg. 1 skizzierte String 1 einer Photovoltaikanlage umfasst eine Vielzahl von Solarmodulen 2. Dabei ist der String 1 in zwei Teilstrings 3 und 4 mit jeweils gleicher Anzahl von Solarmodulen 2 unterteilt. In jedem Tellstring sind die Solarmodule in mehreren Reihenschaltungen angeordnet, die jeweils über eine Sicherung 5 abgesichert und zueinander parallelgeschaltet sind. Die Teilstrings 3 und 4 sind dabei über zwei Sicherheitsschalter 6 und 7 In Reihe geschaltet. Weitere Sicherheitsschalter 8 und 9 sind in Leistungsstromleitungen 10 und 11 vorgesehen, die an die freien Enden der Teilstrings 2 und 3 angeschlossen sind und den von dem String 1 generierten Strom führen. Für alle Sicherheitsschalter 6 bis 9 Ist eine gemeinsame Betätigungseinrichtung 12 vorgesehen. Dabei kann die Betätigungseinrichtung 12 so ausgelegt sein, dass sie die Schalter 6 bis 9 nur bei anliegendern Ansteuersignal schließt. Potentialleitungen 13 und 14 führen jeweils vor den Sicherheitsschaltern 6 und 7 von den beiden Tellstrings 3 und 4 weg. In den Potentialleitungen sind Sicherungen 15 vorgesehen. Insgesamt weist der String 1 gemäß Fig. 1 sechs Anschlüsse 16 und 17 auf, wobei nur die beiden Anschlüsse 16 der Leistungsstromleitungen 10 und 11 mit großen Leitungsquerschnitten verkabelt werden müssen, während die Anschlüsse 17 zu den Potentialleitungen 13 und 14 und zu der Betätigungseinrichtung 12 mit den Adern eines einfachen mehradrigen Steuerkabels von vergleichsweise geringem Leitungsquerschnitt verkabelt werden können. Für die Verkabelung des Strings 1 gemäß Fig. 1 mit einem Wechselrichter über größere Entfernung bedarf es daher eines vergleichsweise geringen Aufwands verglichen mit der Ausgangsleistung des Strings 1, die dieser mit der Summe der Ausgangsspannungen der Teilstrings 3 und 4 von jeweils beispielsweise 600 V, d. h. mit 1200 V und damit durch einen nur halb so großen Strom bereitstellt, als wenn die Teilstrings 3 und 4 zur Spannungsbegrenzung parallelgeschaltet wären.

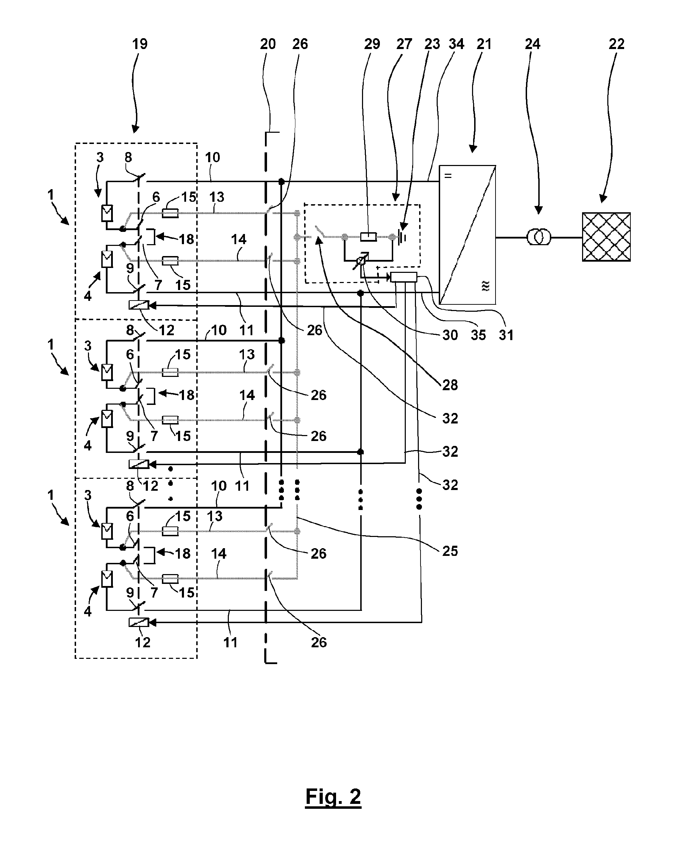

Um in dem gewählten Beispiel dennoch Spannungen gegenüber Erde von mehr als 600 V auch dann zu vermeiden, wenn die beiden Tellstrings durch Schließen der Sicherheitsschalter 6 und 7 in Reihe geschaltet sind, wird ein Mittelpunkt 18 des Strings 1 zwischen den beiden Teilstrings 3 und 4 im Betrieb einer Photovoltaikanlage 19 mit der Schaltungsanordnung gemäß **Fig. 2** mit Erde 23 verbunden. Die Photovoltaikanlage 19 umfasst mehrere, hier drei Strings 1, wobei in Fig. 2 nicht alle Details des Strings 1 gemäß Fig. 1 wiedergegeben sind. Die Strings 1 sind über die Potentialleitungen 13 und 14 in einem Gehäuse 20 eines Wechselrichters 21, der zur Einspeisung elektrischer Energie von der Photovoltaikanlage 19 in ein Wechselstromnetz 22 dient, an Erde 23 angeschlossen. Damit diese Mittelpunkterdung der Strings 1 im Betrieb der Photovoltaikanlage 19 möglich ist, ist die Photovoltaikanlage 19 von dem Wechselstromnetz 22 und damit von dessen Erde galvanisch getrennt. Zu diesem Zweck ist hier ein Transformator 24 zwischen dem Wechselrichter 21 und dem Wechselstromnetz 22 vorgesehen. Die Verbindung der Mittelpunkte 18 der einzelnen Strings 1 mit Erde 23 erfolgt über eine gemeinsame Potentialschiene 25, an die die Potentialleitungen 13 und 14 in dem Gehäuse 20 angeschlossen sind, wobei in dem Gehäuse 20 in jeder Potentialleitung 13 und 14 vor der gemeinsamen Potentialschiene 25 ein Schalter 26 vorgesehen ist. Die Sicherungen 15 in den Potentialleitungen 13 und 14 verhindern einen Kurzschlussstrom über die Potentialschiene 25. Der Anschluss der Potentialschiene 25 an Erde 23 erfolgt über eine Softgrounding-Einrichtung 27, in der ein Schutzschalter 28 mit einem Widerstand 29 zwischen die Potentialschiene 25 und Erde 23 In Reihe geschaltet sind. Im Betrieb der Photovoltaikanlage 1 sind sowohl die Schalter 26 als auch der Schalter 28 geschlossen, und die über dem Widerstand 29 abfallende Spannung, die ein Maß für den von den Mittelpunkten 18 nach Erde 23 fließenden Strom darstellt, wird mit einer Spannungsmesseinrichtung 30 erfasst. Wenn die erfasste Spannung darauf hinweist, dass der nach Erde fließende Strom einen Erdspannungsgrenzwert überschreitet, werden von einer Steuerung 31 über Ansteuerleitungen 32 die Betätigungseinrichtungen 12 so angesteuert, dass sie die Sicherheitsschalter 6 bis 9 öffnen. Zugleich werden der Schalter 28 und der Schalter 26 geöffnet. Durch das Öffnen der Sicherheitsschalter 6 bis 9 sind die Teilstrings 3 und 4 aller Strings 1 getrennt, so dass im Bereich der Photovoltaikanlage 19 maximal die Ausgangsspannung eines Teilstrings 3 bzw. 4 gegenüber Erde anliegt, auch wenn ein Erdschluss an einem dem jeweiligen Mittelpunkt 18 abgekehrten Ende eines Teilstrings 3 bzw. 4 aufgetreten ist und die Erdung des Mittelpunkts 18 durch Öffnen des Schalters 28 beendet wurde, um den ungewollten Erdstrom zu unterbrechen. Um diesen Erdschluss auf den betroffenen Teilstring 3 bzw. 4 zu lokalisieren, ohne dass dabei größere Spannungen als z. B. 600 V im Bereich der Photovoltaikanlage 19 auftreten, bleiben die Sicherheitsschalter 6 bis 9 geöffnet. Geschlossen wird der Schalter 28 und werden dann nacheinander einzeln die Schalter 26, bis der einen Spannungsabfall über den Widerstand 29 auslösende Strom nach Erde 23 wieder auftritt. Dies ist dann der Fall, wenn der Schalter 26 zu dem erdschlussfehlerbehafteten Teilstring 3 bzw. 4 geschlossen wird. Der String 1 mit dem so identifizierten Teilstring 3 bzw. 4 wird anschließend nicht mehr betrieben, bis der Erdschlussfehler beseitigt ist. D. h., seine Sicherheltsschalter 6 bis 9 bleiben offen. Auch die zugehörigen Schalter 26 bleiben geöffnet. Die weiteren Strings 1 können jedoch gefahrlos weiter betrieben werden, indem ihre Sicherheitsschalter 6 bis 9 und die zugehörigen Schalter 26 zur Erdung ihrer Mittelpunkte 18 zusammen mit dem Schalter 28 geschlossen werden.

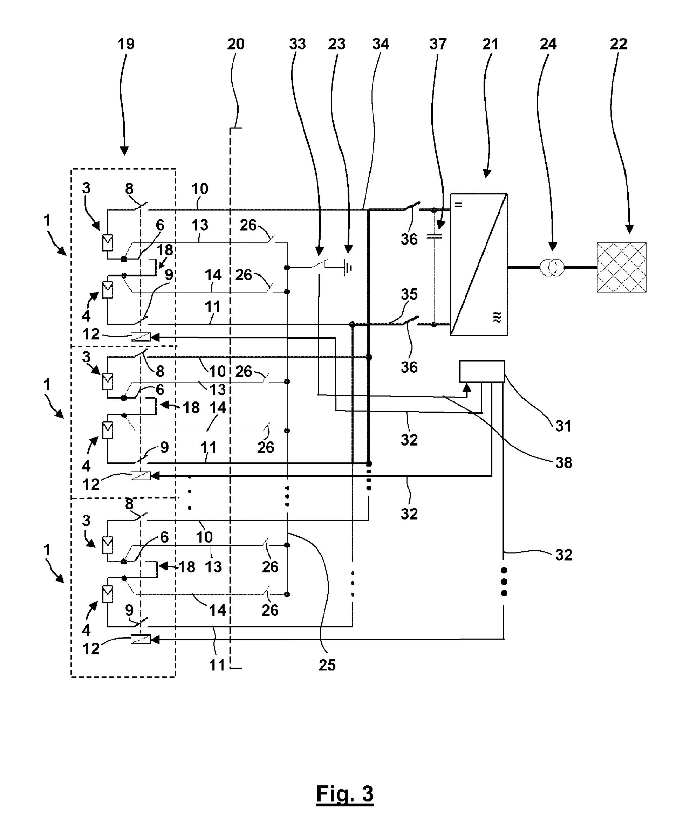

Bei der Ausführungsform der neuen Schaltungsanordnung gemäß Flg. 3 erfolgt die Erdung der Mittelpunkte 18 über die gemeinsame Potentialschiene 25 mittels eines GFDI-Schutzschalters 33, der beim Auftreten eines einen Erdstromgrenzwert überschreitenden Stroms gegen Erde 23 fällt, d. h. öffnet. Insoweit stellt der GFDI-Schutzschalter eine Alternative zu der Softgrounding-Einrichtung 27 gemäß Fig. 2 dar. Weiter ist in Fig. 3 bei den einzelnen Strings jeweils nur ein Sicherheitsschalter 6 zwischen den Teilstrings 3 und 4 vorgesehen und auf die Sicherungen 15 in den Potentialleitungen 13 und 14 ist verzichtet. Diese Sicherungen 15 gemäß den Fig. 1 und 2 müssen sowieso auf einen geringeren Strom als Auslösewert eingestellt sein als die Softgrounding-Einrichtung 27 bzw. der GFDI-Schutzschalter 33. Letztlich ist in Fig. 3 zusätzlich dargestellt, dass in Leistungsstromschlenen 34 und 35, an die die Leistungsstromleitungen 10 und 11 von den einzelnen Strings 1 angeschlossen sind, Leistungsschalter 36 zum Zuschalten der Photovoltaikanlage 19 zu dem Wechselrichter 21 vorgesehen sind. Zusätzlich ist zwischen die Leistungsstromschienen 34 und 35 eine Pufferkapazität 37 am Eingang des Wechselrichters 21 geschaltet. Die grundsätzliche Funktion der Schaltungsanordnung gemäß Fig. 3 entspricht jedoch derjenigen gemäß Fig. 2.

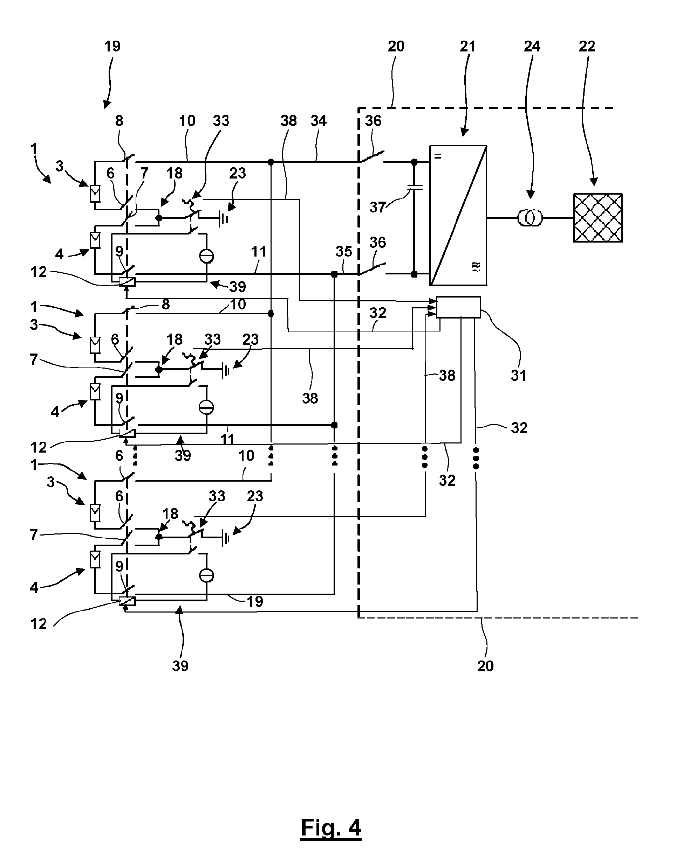

Die Schaltungsanordnung gemäß **Fig. 4** ist eine Abwandlung der Schaltungsanordnung gemäß Fig. 3, bei der für jeden String 1 ein eigener GFDI-Schutzschalter 33 am Ort des Strings 1 vorgesehen ist und von diesem eine Signalleitung 38 zu der zentralen Steuerung 31 im Gehäuse 20 des Wechselrichters 21 führt. Dabei Ist es hier nicht vorgesehen, von der Steuerung 31 aus über die Ansteuerleitungen 32 die Betätigungseinrichtungen 12 zum Öffnen der Sicherheitsschalter 6 bis 9 anzusteuern. Vielmehr sind die Betätigungseinrichtungen 12 jeweils über eine Kopplungseinrichtung 39 so an den GFDI-Schutzschalter gekoppelt, dass bei seinem Fallen die Sicherheitsschalter 6 bis 9 unmittelbar geöffnet werden. Über die Steuerung 31 kann dann durch selektives Schließen der hier wieder beide vorgesehenen Sicherheitsschalter 6 und 7 lokalisiert werden, in welchem Tellstring 3 oder 4 der Erdschluss vorliegt, der zu dem Auslösen des GFDI-Schutzschalters geführt hat. Es versteht sich, dass hierfür zuvor der CFDI-Schutzschalter zurückgesetzt, d. h. wieder geschlossen werden muss. Diese selektive Überprüfung der Teilstrings 3 und 4 ist besonders deshalb nötlg, weil bei einem Erdschluss in nur einem einzigen Teilstring 3 oder 4 der Photovoltaikanlage 19 mehrere GFDI-Schutschalter 33 fallen können. Bevor die Tellstrings 3 und 4 irgendeines Strings 1 wieder ohne Sicherheitsrisiko miteinander verbunden werden können, muss zuvor sichergestellt werden, dass in keinem dieser Teilstrings 3 und 4 der Erdschlussfehler vorliegt. Wenn die Steuerung 31 die Sicherheitsschalter 6 und 7 nicht separat voneinander und separat von den weiteren Sicherheitsschaltern 8 und 9 ansteuern kann, kann jeder GFDI-Schutzschalter 33 auch hier gemäß Fig. 3 über jeweils zwei Potentialleitungen 13 und 14, in denen Schalter 26 angeordnet sind, an den Mittelpunkt 18 angeschlossen sein. Dann wäre es auch wieder möglich, in jedem String 1 auf einen der Sicherheitsschalter 6 und 7 zu verzichten. Die Signalleitungen 38 können ebenso wie die Ansteuerleitungen 32 denselben geringen Leitungsquerschnitt wie die Potentialleitungen 13 und 14 gemäß den Figuren 1 bis 3 aufweisen.

**BEZUGSZEICHENLISTE**

| | | | |
|---|---|---|---|
| 1 | String | 31 | Steuerung |
| 2 | Solarmodul | 32 | Ansteuerleitung |
| 3 | Tellstring | 33 | GFDI-Schutzschalter |
| 4 | Tellstring | 34 | Leistungsstromschiene |
| 5 | Sicherung | 35 | Leistungsstromschiene |
| 6 | Sicherheitsschalter | 36 | Leistungsschalter |
| 7 | Sicherheitsschalter | 37 | Pufferkapazität |
| 8 | Sicherheitsschalter | 38 | Signalleitung |
| 9 | Sicherheitsschalter | 39 | Kopplungseinrichtung |
| 10 | Leistungsstromleitung | | |
| 11 | Leistungsstromleitung | | |
| 12 | Betätigungseinrichtung | | |
| 13 | Potentialleitung | | |
| 14 | Potentialleitung | | |
| 15 | Sicherung | | |
| 16 | Anschluss | | |
| 17 | Anschluss | | |
| 18 | Mittelpunkt | | |
| 19 | Photovoltaikanlage | | |
| 20 | Gehäuse | | |
| 21 | Wechseirichter | | |
| 22 | Wechselstromnetz | | |
| 23 | Erde | | |
| 24 | Transformator | | |
| 25 | Potentialschiene | | |
| 26 | Schalter | | |
| 27 | Soft-Grouding-Einrichtung | | |
| 28 | Schalter | | |
| 29 | Widerstand | | |
| 30 | Spannungsmesseinrichtung | | |

## Patentansprüche

1. Verfahren zum Verbinden mindestens eines Strings (1) einer Photovoltaikanlage (19), der mehrere Solarmodule (2) umfasst, mit einem Wechselrichter (21), der elektrische Leistung von der Photovoltaikanlage (19) in ein Wechselstromnetz (22) einspeist, wobei der String (1) in zwei in Reihe geschaltete Teilstrings (3, 4) unterteilt wird, wobei der String (1) über zwei Leistungsstromleitungen (10, 11) mit dem Wechselrichter (21) verbunden wird und wobei in jeder der Leistungsstromleitungen (10, 11) ein Sicherheitsschalter (8, 9) vorgesehen wird, wobei der String (1) von dem Wechselstromnetz (22) galvanisch entkoppelt wird, wobei ein Mittelpunkt (18) des Strings (1) zwischen den beiden Teilstrings (3, 4) im Betrieb der Photovoltaikanlage (19) mit Erde (23) verbunden wird und wobei die Sicherheitsschalter (6-9) geöffnet werden, wenn von dem Mittelpunkt (18) des Strings (1) ein Strom nach Erde (23) fließt, der einen Erdstromgrenzwert überschreitet, **dadurch gekennzeichnet, dass** zwischen die beiden Teilstrings (3, 4) mindestens ein weiterer Sicherheitsschalter (6, 7) geschaltet wird und dass zwischen Erde (23) und jedem der Teilstrings (3, 4) mindestens ein dem jeweiligen Teilstring (3, 4) zugeordneter Schalter (6, 7, 26) vorgesehen wird, über den der jeweilige Teilstring (3, 4) zur Lokalisierung eines Erdschlussfehlers einzeln mit Erde (23) verbunden wird.

2. Verfahren nach Anspruch 1, **dadurch gekennzeichnet, dass** die Mittelpunkte (18) mehrerer Strings (1) über eine gemeinsame Potentialschiene (25) mit Erde (23) verbunden werden.

3. Verfahren nach Anspruch 1 oder 2, **dadurch gekennzeichnet, dass** nach einer Lokalisierung eines Erdschlussfehlers nur noch den Erdschlussfehler nicht aufweisende Strings (1) wieder mit dem Wechselrichter (21) verbunden werden.

4. Verfahren nach mindestens einem der vorhergehenden Ansprüche, **dadurch gekennzeichnet, dass** mehrere Strings (1) über jeweils zwei Leistungsstromleitungen (11) an einen 10 bis 1000 m von ihnen entfernt liegenden Wechselrichter (21) angeschlossen werden, wobei die Sicherheitsschalter (6 bis 8) jedes Strings (1) am Ort dieses Strings (1) angeordnet werden.

5. Schaltungsanordnung zum Verbinden mindestens eines Strings (1) einer Photovoltaikanlage (19), der mehrere Solarmodule (2) umfasst, mit einem Wechselrichter (21), der elektrische Leistung von der Photovoltaikanlage (19) in ein Wechselstromnetz (22) einspeist, wobei der String (1) in zwei in Reihe geschaltete Teilstrings (3, 4) unterteilt ist, wobei der String (1) über zwei Leistungsstromleitungen (10, 11) mit dem Wechselrichter (21) verbunden ist, wobei in jeder der Leistungsstromleitungen (10, 11) ein Sicherheitsschalter (8, 9) vorgesehen ist, wobei der String (1) von dem Wechselstromnetz (22) galvanisch entkoppelt ist, wobei ein Mittelpunkt des Strings (1) zwischen den beiden Teilstrings (3, 4) im Betrieb der Photovoltaikanlage (19) mit Erde verbunden ist und wobei Erdschlusssicherheitseinrichtungen einen Strom von dem Mittelpunkt (18) des Strings (1) nach Erde (23) erfassen und dann, wenn der Strom einen Erdstromgrenzwert überschreitet, die Sicherheitsschalter (6-9) öffnen, **dadurch gekennzeichnet, dass** zwischen die beiden Teilstrings (3, 4) mindestens ein weiterer Sicherheitsschalter (6, 7) geschaltet ist und dass zwischen Erde (23) und jedem der Teilstrings (3, 4) mindestens ein dem jeweiligen Teilstring (3, 4) zugeordneter Schalter (6, 7, 26) vorgesehen ist, den die Erdschlusssicherheitseinrichtungen zur Lokalisierung eines Erdschlussfehlers einzeln schließen.

6. Schaltungsanordnung nach Anspruch 5, **dadurch gekennzeichnet, dass** der Mittelpunkt (18) über einen GFDI-Schutzschalter (33) mit Erde (23) verbunden ist.

7. Schaltungsanordnung nach Anspruch 5, **dadurch gekennzeichnet, dass** der Mittelpunkt (18) über einen Widerstand (29) mit Erde (23) verbunden ist, wobei die Erdschlusssicherheitseinrichtungen eine über dem Widerstand (29) abfallende Spannung erfassen.

8. Schaltungsanordnung nach mindestens einem der vorhergehenden Ansprüche, **dadurch gekennzeichnet, dass** der Mittelpunkt (18) in einem Gehäuse (20) des Wechselrichters (21) mit Erde (23) verbunden ist.

9. Schaltungsanordnung nach Anspruch 8, **dadurch gekennzeichnet, dass** neben den Leistungsstromleitungen (10, 11) nur Leitungen (13, 14, 32, 38) mit geringem Leitungsquerschnitt von dem String (1) zu dem Gehäuse (20) des Wechselrichters (21) führen.

10. Schaltungsanordnung nach mindestens einem der vorhergehenden Ansprüche, **dadurch gekennzeichnet, dass** die Mittelpunkte (18) mehrerer Strings über eine gemeinsame Potentialschiene (25) gemeinsam mit Erde (23) verbunden sind.

11. Schaltungsanordnung nach Anspruch 10, **dadurch gekennzeichnet, dass** die den einzelnen Teilstrings (3, 4) zugeordneten Schalter (26) in einem Gehäuse (20) des Wechselrichters (21) angeordnet sind.

12. Schaltungsanordnung nach Anspruch 10 oder 11, **dadurch gekennzeichnet, dass** die Erdschlusssicherheitseinrichtungen nach einer Lokalisierung eines Erdschlussfehlers nur noch den Erdschlussfehler nicht aufweisende Strings (1) wieder mit dem Wechselrichter (21) verbinden.

13. Schaltungsanordnung nach mindestens einem der vorhergehenden Ansprüche, **dadurch gekennzeichnet, dass** mehrere Strings (1) über jeweils zwei Leistungsstromleitungen (11) an einen 10 bis 1000 m von ihnen entfernt liegenden Wechselrichter (21) angeschlossen sind, wobei sich die Sicherheitsschalter (6 bis 8) jedes Strings (1) am Ort dieses Strings (1) befinden.

## Claims

1. Method for connecting at least one string (1) of a photovoltaic system (19) to an inverter (21) feeding electric power from the photovoltaic system (19) into an AC power grid (22), the string including a plurality of solar modules (2), wherein the string (1) is subdivided into two partial strings (3, 4) connected in series, wherein the string (1) is connected to the inverter (21) via two power current lines (10, 11) and wherein, in each of the power current lines (10, 11), a further security switch (8, 9) is provided, wherein the string (1) is galvanically decoupled from the AC power grid (22), wherein, in operation of the photovoltaic system (19), a centre point (18) of the string (1) between the two partial strings (3, 4) is connected to ground (23), and wherein the security switches (6-9) are opened, if a current towards ground (23) flowing from the centre point (18) of the string (1) exceeds a ground current limit value, **characterised in that** at least one further security switch (6, 7) is connected between the two partial strings (3, 4), and that, between ground (23) and each of the partial strings (3, 4), at least one switch (6, 7, 26) assigned to the respective partial string (3, 4) is provided, via which the respective partial string (3 ,4) is individually connected to ground (23) for localizing a ground fault.

2. Method of claim 1, **characterised in that** the centre points (18) of a plurality of strings (1) are connected to ground (23) via a common potential rail (25).

3. Method of claim 1 or 2, **characterised in that** after a localization of a ground fault, only those strings (1) not comprising the ground fault are reconnected to the inverter (21).

4. Method of at least one of the preceding claims, **characterised in that** several strings (1), each via two power current lines (11), are connected to an inverter (21) located at a distance of 10 to 1000 m, wherein the security switches (6 to 8) of each string (1) are arranged at the location of this string (1).

5. Circuitry arrangement for connecting at least one string (1) of a photovoltaic system (19) to an inverter (21) feeding electric power from the photovoltaic system (19) into an AC power grid (22), the string comprising a plurality of solar modules (2), wherein the string (1) is subdivided into two partial strings (3, 4) connected in series, wherein the string (1), via two power current lines (10, 11), is connected to the inverter (21), wherein, in each of the power current lines (10, 11), a security switch (8, 9) is provided, wherein the string (1) is galvanically decoupled from the AC power grid (22), wherein, in operation of the photovoltaic system (19), a centre point of the string (1) between the two partial strings (3, 4) is connected to ground, and wherein ground fault security devices register a current from the centre point (18) of the string (1) towards ground (23), and open the security switches (6-9), if the current exceeds a ground current limit value, **characterised in that** at least one further security switch (6, 7) is connected between the two partial strings (3, 4), and that, between ground (23) and each of the partial strings (3, 4), at least one further switch (6, 7, 26) assigned to the respective partial string (3, 4) is provided, the ground fault security devices individually closing the at least one further switch (6, 7, 26) for localizing a ground fault.

6. Circuitry arrangement of claim 5, **characterised in that** the centre point (18) is connected to ground (23) via a GFDI protection switch (33).

7. Circuitry arrangement of claim 5, **characterised in that** the centre point (18) is connected to ground (23) via a resistor (29), wherein the ground fault security devices register a voltage dropping over the resistor (29).

8. Circuitry arrangement of at least one of the preceding claims, **characterised in that** the centre point (18) is connected to ground (23) within a housing (20) of the inverter (21).

9. Circuitry arrangement of claim 8, **characterised in that**, besides the power current lines (10, 11), only lines (13, 14, 32, 38) having a smaller line cross section lead from the string (1) to the housing (20) of the inverter (21).

10. Circuitry arrangement of at least one of the preceding claims, **characterised in that** the centre points (18) of several strings are together connected to ground (23) via a common potential rail (25).

11. Circuitry arrangement of claim 10, **characterised in that** the switches (26) assigned to the individual partial strings (3, 4) are arranged in a housing (20) of the inverter (21).

12. Circuitry arrangement of claim 10 or 11, **characterised in that** the ground fault security devices, after a localization of a ground fault, only reconnect those stings (1) not comprising the ground fault to the inverter (21).

13. Circuitry arrangement of at least one of the preceding claims, **characterised in that** several strings (1), each via two power current lines (11), are connected to an inverter (21) located at a distance of 10 to 1000 m, wherein the security switches (6 to 8) of each string (1) are at the location of this string (1).

## Revendications

1. Procédé permettant de relier au moins une chaîne (1) d'une installation photovoltaïque (19), laquelle comporte plusieurs modules solaires (2), à un onduleur (21) qui injecte de l'énergie électrique depuis l'installation photovoltaïque (19) dans un réseau de courant alternatif (22), ladite chaîne (1) étant divisée en deux chaînes partielles (3, 4) montées en série, ladite chaîne (1) étant reliée à l'onduleur (21) par l'intermédiaire de deux lignes de courant d'alimentation (10, 11), et un interrupteur de sécurité (8, 9) étant prévu dans chacune des lignes de courant d'alimentation (10, 11), ladite chaîne (1) étant découplée du réseau de courant alternatif (22) au moyen d'un découplage galvanique, un centre (18) de la chaîne (1) entre les deux chaînes partielles (3, 4) étant relié à la terre (23) en cours de service de l'installation photovoltaïque (19), et les interrupteurs de sécurité (6 - 9) étant ouverts lorsqu'un courant, qui est supérieur à une valeur limite du courant de terre, circule depuis le centre (18) de la chaîne (1) vers la terre (23), **caractérisé en ce qu'**entre les deux chaînes partielles (3, 4) est monté au moins un interrupteur de sécurité (6, 7) supplémentaire, et **en ce qu'**entre la terre (23) et chacune des chaînes partielles (3, 4) est prévu au moins un interrupteur (6, 7, 26), qui est associé à la chaîne partielle (3, 4) correspondante et par l'intermédiaire duquel la chaîne partielle (3, 4) correspondante est reliée individuellement à la terre (23) en vue de localiser un défaut de mise à la terre.

2. Procédé selon la revendication 1, **caractérisé en ce que** les centres (18) de plusieurs chaînes (1) sont reliés à la terre (23) via un rail de potentiel (25) commun.

3. Procédé selon la revendication 1 ou 2, **caractérisé en ce qu'**à la suite de la localisation d'un défaut de mise à la terre, seule la chaîne (1) ne comportant pas le défaut de mise à la terre est à nouveau reliée à l'onduleur (21).

4. Procédé selon au moins l'une quelconque des revendications précédentes, **caractérisé en ce que** plusieurs chaînes (1) sont raccordées via deux lignes de courant d'alimentation (11) à un onduleur (21) situé à une distance de 10 à 1000 m de celles-ci, les interrupteurs de sécurité (6 à 8) de chaque chaîne (1) étant disposés sur l'emplacement de cette chaîne (1).

5. Système de connexion permettant de relier au moins une chaîne (1) d'une installation photovoltaïque (19), laquelle comporte plusieurs modules solaires (2), à un onduleur (21) qui injecte de l'énergie électrique depuis l'installation photovoltaïque (19) dans un réseau de courant alternatif (22), ladite chaîne (1) étant divisée en deux chaînes partielles (3, 4) montées en série, ladite chaîne (1) étant reliée à l'onduleur (21) par l'intermédiaire de deux lignes de courant d'alimentation (10, 11), un interrupteur de sécurité (8, 9) étant prévu dans chacune des lignes de courant d'alimentation (10, 11), ladite chaîne (1) étant découplée du réseau de courant alternatif (22) au moyen d'un découplage galvanique, un centre (18) de la chaîne (1) entre les deux chaînes partielles (3, 4) étant relié à la terre (23) en cours de service de l'installation photovoltaïque (19), et des dispositifs de protection contre les défauts de mise à la terre détectant un courant circulant depuis le centre (18) de la chaîne (1) vers la terre (23) et ensuite, les interrupteurs de sécurité (6 - 9) s'ouvrant lorsque ledit courant est supérieur à une valeur limite du courant de terre, **caractérisé en ce qu'**entre les deux chaînes partielles (3, 4) est monté au moins un interrupteur de sécurité (6, 7) supplémentaire, et **en ce qu'**entre la terre (23) et chacune des chaînes partielles (3, 4) est prévu au moins un interrupteur de sécurité (6, 7, 26) qui est associé à la chaîne partielle (3, 4) correspondante et que les dispositifs de protection contre les défauts de mise à la terre ferment individuellement en vue de localiser un défaut de mise à la terre.

6. Système de connexion selon la revendication 5, **caractérisé en ce que** le centre (18) est relié à la terre (23) par un interrupteur de sécurité (33) de type GFDI.

7. Système de connexion selon la revendication 5, **caractérisé en ce que** le centre (18) est relié à la terre (23) par l'intermédiaire d'une résistance (29), les dispositifs de protection contre les défauts de mise à la terre détectant une tension chutant au-dessus de la résistance (29).

8. Système de connexion selon au moins l'une quelconque des revendications précédentes, **caractérisé en ce que** le centre (18) est relié à la terre (23) dans un carter (20) de l'onduleur (21).

9. Système de connexion selon la revendication 8, **caractérisé en ce que**, outre les lignes de courant d'alimentation (10, 11), seules des lignes (13, 14, 32, 38) à faible section transversale mènent de la chaîne (1) vers le carter (20) de l'onduleur (21).

10. Système de connexion selon au moins l'une quelconque des revendications précédentes, **caractérisé en ce que** les centres (18) de plusieurs chaînes sont reliés conjointement à la terre (23) par l'intermédiaire d'un rail de potentiel (25) commun.

11. Système de connexion selon la revendication 10, **caractérisé en ce que** les interrupteurs (26) associés aux chaînes partielles (3, 4) sont disposés dans un carter (20) de l'onduleur (21).

12. Système de connexion selon la revendication 10 ou 11, **caractérisé en ce que**, à la suite de la localisation d'un défaut de mise à la terre, les dispositifs de protection contre les défauts de mise à la terre relient à nouveau à l'onduleur (21) uniquement la chaîne (1) ne comportant pas le défaut de mise à la terre.

13. Système de connexion selon au moins l'une quelconque des revendications précédentes, **caractérisé en ce que** plusieurs chaînes (1) sont raccordées via deux lignes de courant d'alimentation (11) à un onduleur (21) situé à une distance de 10 à 1000 m de celles-ci, les interrupteurs de sécurité (6 à 8) de chaque chaîne (1) étant disposés sur l'emplacement de cette chaîne (1).
